# EUROPÄISCHE PATENTSCHRIFT

(11) **EP 1 147 729 B1**
(45) Veröffentlichungstag und Bekanntmachung des Hinweises auf die Patenterteilung: **25.02.2004**
(21) Anmeldenummer: 00108732.9
(22) Anmeldetag: 22.04.2000
(51) Int. Cl.: A47J 27/04, F22B 1/28

(54) **Einspritzdampferzeuger für Kleingeräte**
Steam injector for small appliances
Injecteur de vapeur pour des petits appareils

(43) Veröffentlichungstag der Anmeldung: 24.10.2001
(73) Patentinhaber: Eugster/Frismag AG, CH-8590 Romanshorn (CH)
(72) Erfinder: Fischer, Daniel, 8590 Romanshorn (CH); Stieger, Mischa, 9000 St. Gallen (CH)
(74) Vertreter: Schubert, Siegmar, Dipl.-Ing.

(56) Entgegenhaltungen:
- EP-A- 0 395 843
- DE-U- 29 819 024
- US-A- 4 614 661
- US-A- 4 765 364

## Beschreibung

Die Erfindung betrifft einen Einspritzdampferzeuger für Kleingeräte, insbesondere Bügeleisen bzw. Bügelstationen nach dem Oberbegriff des Anspruchs 1.

Ein derartiger bekannter bzw. vorgeschlagener Einspritzdampferzeuger besteht im einzelnen aus einer dickwandigen, beheizten, vorzugsweise zylinderförmig aufrecht stehenden Dampfkammer mit einer außerhalb der Dampfkammer angeordneten und senkrecht zur Zylindermantelwand hin- und herfahrbaren Wasser-Einspritzdüse (DE 298 190 24 bzw. EP 0 997 092). Die Wasser-Einspritzdüse, nachfolgend auch kurz Düse bezeichnet, bewegt sich bei einer Dampfanforderung unter der Wirkung des durch eine Pumpe erzeugten Innendrucks in einer Düsenkammer auf die Dampfkammer zu und verschließt in ihrer Endposition ein Einspritzloch mit Düsendichtungssitz druckdicht. Durch das Einspritzloch wird in dieser Position der Düse eine vorbestimmte Masse Wasser in die erhitzte Dampfkammer gesprüht, aus der eine entsprechende Dampfmenge entlassen wird. Nach der Dampfanforderung kann die Düse wieder selbsttätig in ihre Ausgangsposition zurückbewegt werden. Um Kondenswasserbildung in unmittelbarer Umgebung des Einspritzdampferzeugers, insbesondere in einem Gehäuse, in dem der Einspritzdampferzeuger eingebaut ist, zu vermeiden und Restdampf, der bei Zurückfahren der Düse aus dem Einspritzloch heraussprüht, aufzufangen und nach außen zu leiten, ist zwischen der Düse und der äußeren Dampfkammerwand ein Silikonschlauch angeordnet, der auf der Düsenseite von der Düse dampfdicht durchstoßen ist, und der auf der gegenüberliegenden Seite mit einer Öffnung dampfdicht an dem Einspritzloch befestigt ist. Endabschnitte des Silikonschlauchs sind in Bereiche benachbart des Einspritzdampferzeugers geführt, in dem der Restdampf problemlos aufgenommen werden kann, beispielsweise in einem Vorratswassertank unterhalb der Düse, in den auch aus dem Restdampf gebildetes Kondensat fließen kann. Statt des Silikonschlauchs kann ein nicht flexibles Rohr verwendet werden, durch dessen äußere Wandöffnung ein zylindrischer Teil der Düse dampfdicht hin und her gleiten kann.

Mit keiner dieser Ausführungsformen wird jedoch verhindert, dass beim Zurückfahren der Düse nach Beendigung der Dampfanforderung infolge des sich verringernden Volumens der Düsenkammer aus der Düse Restwasser entlassen wird, welches die Düse benetzt und nach unten in die verhältnismäßig groß dimensionierte Abwasser-Auffangschale läuft. Das aus der Düse austretende Restwasser benetzt bei einem folgenden Arbeitsspiel auch den heißen Düsendichtungssitz um das Einspritzloch, wodurch der Düsendichtungssitz in der Dampfkammerwand nach mehreren Arbeitsspielen verkalken und die Düse nicht mehr vollständig abdichten kann. Außerdem ist durch die zwangsweise tiefe Anordnung der Abwasser-Auffangschale oder eines an deren Stelle vorgesehenen Wasservorratsbehälters unterhalb der Düse die gestalterische Freiheit für ein Gerät mit einem solchen Einspritzdampferzeuger eingeschränkt.

Der vorliegenden Erfindung liegt daher die Aufgabe zugrunde, einen Einspritzdampferzeuger der eingangs genannten Gattung zu schaffen, bei dem durch solches Restwasser aus der Düsenkammer keine Verkalkung der Düsenöffnung sowie des Einspritzlochs und des sie umgebenden Düsendichtungssitzes eintritt.

Diese Aufgabe wird durch die Ausbildung des Einspritzdampferzeugers mit den in Anspruch 1 angegebenen Merkmalen gelöst.

Mit der unkomplizierten Ventilanordnung, über die die Düsenkammer mit einem Ablaufkanal verbunden ist, und einer geeigneten Dimensionierung der Ventilanordnung, um deren Funktion in Abhängigkeit von den in der Düsenkammer auftretenden Druckverhältnissen selbsttätig zu steuern, wird erreicht, dass das bei dem sich verkleinernden Volumen der zurückfahrenden Düse abzuführende Restwasser praktisch nicht aus der Düsenöffnung entlassen wird und nicht diese sowie bei dem nächsten Arbeitsspiel den Dichtungsring befeuchten kann, sondern durch einen von der Düsenöffnung entfernten getrennten Ablaufkanal entlassen wird.

Gemäß Anspruch 5 kann der Ablaufkanal zu einem Vorratswasserbehälter führen, der höher als die Düsenkammer angeordnet ist. Dadurch kann ein Gerät, welches einen solchen Einspritzdampferzeuger umfasst, ohne Beschränkung der Einbaustelle des Vorratswasserbehälters frei gestaltet werden.

Die Ventilanordnung ist so dimensioniert, dass sie ohne Fremdsteuerung während der Dampfanforderung, wenn in der Ventilkammer erhöhter Druck in einem ersten Druckbereich herrscht, die Ventilanordnung verschließt, so dass nur das zu verdampfende Wasser die Düsenkammer durch die Düsenöffnung verlässt, jedoch kein Wasser durch den Ablaufkanal. Die Wirksamkeit des Einspritzdampferzeugers wird also nicht beeinträchtigt. Erst nach Abschluss der Dampfanforderung, wenn der Innendruck in der Düsenkammer nachlässt und Werte in einem zweiten Druckbereich annimmt, die insbesondere durch eine Rückholfeder bestimmt sind, welche die bewegliche Düse in ihre Ausgangsposition bewegt, öffnet die Ventilanordnung, so dass durch diese das Restwasser bei Volumenverkleinerung der Düsenkammer praktisch vollständig herausgedrückt wird, nicht aber durch die Düsenöffnung, die einen höheren Strömungswiderstand bildet.

Diese Mittel zur Restwasserbeseitigung sind nach Anspruch 2 zweckmäßig kombiniert mit einer Ausbildung des Einspritzdampferzeugers, bei der an dem feststehenden Teil der Düsenkammer eine Pumpe mit einem Pumpenaustrittsventil angeordnet ist, die bei Pumpbetrieb einen Innendruck in der Düsenkammer in dem ersten Druckbereich von 10-12 bar erzeugt, und bei der die Rückholfeder so bemessen ist, dass bei Zurückbewegung der Düse ein Innendruck in der Düsenkammer von 5-6 bar entsteht, wobei der zweite Druckbereich zwischen 5-6 bar als oberer Grenze und Atmosphärendruck als unterer Grenze liegt. Mit anderen Worten: Die Ventilanordnung verschließt die Düsenkammer in einer Arbeitsstellung, die durch den Pumpenlauf bestimmt ist, und öffnet die Ventilanordnung bei Entspannung des Drucks in der Düsenkammer und in Ruhestellung.

In einer ersten unkomplizierten Ausführungsform des Einspritzdampferzeugers ist als Ventilanordnung eine Membranventil vorgesehen, bei dem eine Membran eine Ventilklappe bildet, die in dem ersten Druckbereich in der Düsenkammer geschlossen ist und in dem zweiten Druckbereich geöffnet ist.

Alternativ kann die Ventilanordnung durch ein federbelastetes Kugelventil gemäß Anspruch 4 realisiert sein, welches in dem ersten Druckbereich entgegen der Federbelastung geschlossen ist und in dem zweiten Druckbereich durch die Federbelastung geöffnet ist.

Demgemäß werden im folgenden zwei Ausführungsbeispiele der Erfindung anhand einer Zeichnung mit drei Figuren beschrieben, aus der weitere wesentliche Merkmale hervorgehen können. Es zeigt:

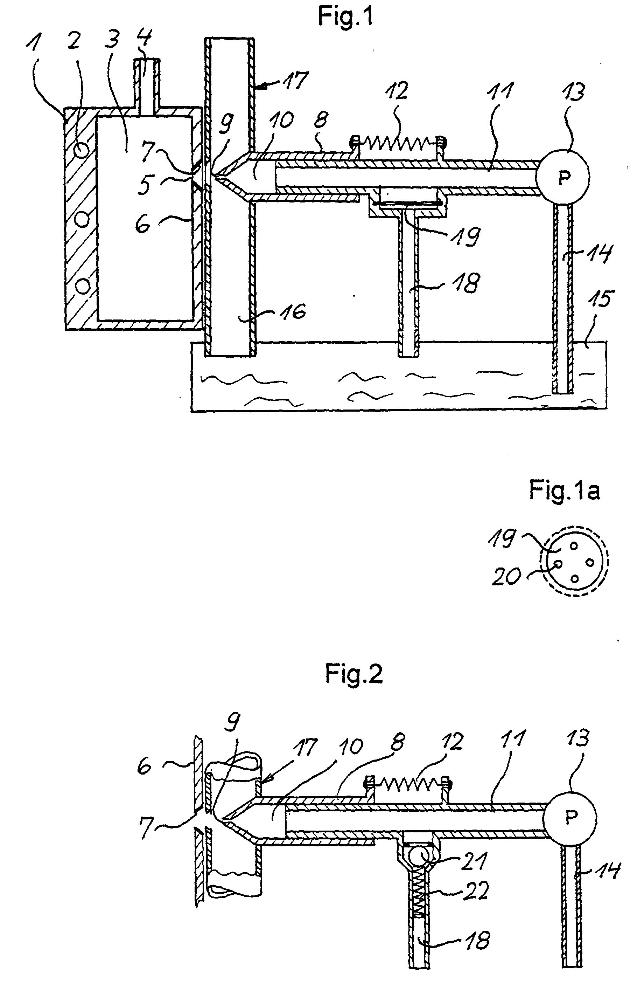

- Figur 1:: einen Längsschnitt durch eine erste Ausführungsform des Einspritzdampferzeugers,
- Figur 1 a:: eine Draufsicht auf einen wesentlichen Teil der Restwasserabführung, nämlich auf eine Membran eines Membranventils als Ventilanordnung in dem Ablaufkanal, und
- Figur 2:: ebenfalls im Längsschnitt einen wesentlichen Teil einer zweiten Ausführungsform des Einspritzdampferzeugers mit einem federbelasteten Kugelventil als Ventilanordnung.

In Figur 1 ist mit 1 ein Dampferzeugergehäuse bezeichnet, in welches eine Heizung 2 eingelassen ist und welches wenigstens zum Teil wärmespeichernd wirkt. Eine Dampfkammer 3 in dem Dampferzeugergehäuse ist an einem ventillosen Dampfauslass 4 offen, aus dem der zu nutzende Dampf strömen kann, sowie an einem Einspritzloch 5 in einer Dampfkammerwand 6, welches von einem Düsendichtungssitz 7 umgeben ist, solange das Einspritzloch nicht abgeschlossen ist. Rechtwinklig zu einer nicht dargestellten vertikalen Hauptachse der Dampfkammer 3 beziehungsweise des Dampferzeugergehäuses 1 ist waagerecht eine verschiebbare Düse 8 so angeordnet, dass sie zu dem Einspritzloch 5 geschoben werden kann und dabei an dem Düsendichtungssitz 7 druckdicht anliegen kann. Eine Düsenöffnung 9 ist damit nach außen abgedichtet und steht mit der Dampfkammer 3 in Verbindung. Die Düse 8 ist auf einem feststehenden Teil 11 der Düsenkammer teleskopisch verschiebbar gelagert. Sie wird im Ruhezustand durch eine Rückholfeder 12 in die in Figur 1 dargestellte Ausgangsstellung positioniert.

Der feststehende Teil 11 der Düsenkammer ist an eine Pumpe 13 mit einem Pumpenaustrittsventil angeschlossen. Die Pumpe kann über eine Ansaugleitung 14 aus einem Wasservorratsbehälter 15 Wasser ansaugen. Der Wasservorratsbehälter ist in Figur 1 unterhalb der Pumpe dargestellt, kann sich jedoch alternativ auch zumindest zum Teil über der Pumpe 13 befinden. Letzteres gilt nicht für den Teil des Wasservorratsbehälters, in den ein unterer Abschnitt 16 eines Schlauchs oder eines unflexiblen Rohrs 17 reicht, der beziehungsweise das von der Düse 8 zur äußeren Schlauchumgebung dampfdicht durchstoßen ist und auf der gegenüberliegenden Seite mit einer Öffnung über dem Einspritzloch 5 dampfdicht befestigt ist, um aus dem Einspritzloch entweichenden Dampf und hieraus entstehendes Kondensat abzuleiten, wobei das Kondensat in den Wasservorratsbehälter fließen kann.

Um nicht verdampftes Restwasser aus der inneren Düsenkammer 10 und/oder dem feststehenden Teil der Düsenkammer 11 über die Düsenöffnung 9 abzuführen, ist der bevorzugte Einspritzdampferzeuger nach Figur 1 an seinem feststehenden Teil der Düsenkammer 11 mit einem Ablaufkanal 18 ausgestattet, der über ein Membranventil 19 mit dem Wasservorratsbehälter 15 in Verbindung steht. Das Membranventil 19 weist in seiner Membran, wie in Figur 1a dargestellt, Ventilmembran-Löcher 20 auf, durch die Restwasser auf die untere Seite der Membran und von dort weiter in den Ablaufkanal 18 gelangen kann, wenn das Membranventil 19 nicht schließt. Das Membranventil schließt, wenn der Innendruck in der Düsenkammer bestehend aus dem feststehenden Teil 11 und der inneren Düsenkammer 10 in einem ersten Druckbereich aufgebaut wird, der durch die Funktion der Pumpe 13 bei Dampfanforderung bestimmt wird und typisch 10-12 bar beträgt. Andererseits öffnet das Entspannungsventil, wenn der Innendruck in der genannten Düsenkammer abfällt, weil die Pumpe 13 abgeschaltet ist. In diesem Fall ist der Innendruck in einem zweiten Druckbereich geringer als in dem ersten Druckbereich, nämlich durch die Wirkung der Rückholfeder typisch nur 5-6 bar. Dieser geringere Überdruck genügt, um das Restwasser sicher aus der Düsenkammer zu entlassen und in einen über der Düsenkammer angeordnetem Wasservorratsbehälter zu drücken, d.h. zurückzuleiten. Die Restwassermenge kann erheblich sein, weil die verschiebbare Düse 8 einen verhältnismäßig großen Durchmesser aufweisen kann, um die gewünschte Dichtkraft an dem Dampferzeugergehäuse zu erzeugen.

In der zweiten Ausführungsform gemäß Figur 2 sind übereinstimmende Elemente mit den gleichen Bezugszeichen wie in Figur 1 versehen. Sie unterscheidet sich von der ersten Ausführungsform durch die Ventilanordnung, die hier anstelle des Membranventils als Kugelventil 21 ausgeführt ist, welches mit einer Feder 22 belastet ist. Das Kugelventil ist dabei im einzelnen so ausgebildet und dimensioniert, dass es den Ablaufkanal 18 verschließt, wenn bei Dampfanforderung die Pumpe 13 läuft, und den Ablaufkanal 18 öffnet, wenn die verschiebbare Düse 8 nach Abschalten des Pumpenmotors 13 durch die Rückholfeder zurückgebogen wird und sich dementsprechend ein kleinerer Überdruck in der inneren Düsenkammer 10 und dem feststehenden Teil 11 der Düsenkammer einstellt.

### Bezugszeichenliste

- 1.: Dampferzeugergehäuse
- 2.: Heizung
- 3.: Dampfkammer
- 4.: Dampfauslass
- 5.: Einspritzloch
- 6.: Dampfkammerwand
- 7.: Düsendichtungssitz
- 8.: Verschiebbare Düse
- 9.: Düsenöffnung
- 10.: Innere Düsenkammer
- 11.: Feststehender Teil der Düsenkammer
- 12.: Rückholfeder
- 13.: Pumpe
- 14.: Ansaugleitung
- 15.: Wasservorratsbehälter
- 16.: unterer Abschnitt eines Schlauchs
- 17.: Schlauch
- 18.: Ablaufkanal
- 19.: Membranventil
- 20.: Ventilmembran-Löcher
- 21.: Kugelventil
- 22.: Feder

## Patentansprüche

1. Einspritzdampferzeuger für Kleingeräte, insbesondere Bügeleisen beziehungsweise Bügelstationen, mit einer Dampfkammer (3) in einem Dampferzeugergehäuse (1), welches ein Einspritzloch (5) aufweist, mit einer verschiebbaren Düse (8), die auf einem feststehenden Teil (11) einer Düsenkammer (10,11) teleskopisch gelagert ist, die durch einen Innendruck in der Düsenkammer in einem ersten Druckbereich in Richtung auf das Einspritzloch (5) verschiebbar ist und die durch eine Rückholkraft, insbesondere einer Rückholfeder (12) von dem Einspritzloch (5) zurückbewegbar ist, wobei der Innendruck in der Düsenkammer (10,11) in einem zweiten Druckbereich kleiner als in dem ersten Druckbereich ist, sowie mit Mitteln zum Ableiten von Restwasser aus dem Einspritzdampferzeuger bei Zurückbewegen der Düse (8),
**dadurch gekennzeichnet,**
**dass** zum Ableiten von überschüssigem Restwasser aus der Düsenkammer (10,11) bei Zurückbewegen der Düse (8) ein Ablaufkanal (18) über eine Ventilanordnung (19,21) mit dem festen Teil (11) der Düsenkammer verbunden ist und dass die Ventilanordnung (19,21) so ausgebildet ist, dass sie den Ablaufkanal (18) in dem ersten Druckbereich des Innendrucks in der Düsenkammer (10,11) schließt und in dem zweiten Druckbereich des Innendrucks in der Düsenkammer (10,11) öffnet.

2. Einspritzdampferzeuger nach Anspruch 1,
**dadurch gekennzeichnet,**
**dass** an den feststehenden Teil (11) der Düsenkammer eine Pumpe (13) mit einem Pumpenaustrittsventil angeordnet ist, die bei Pumpenbetrieb einen Innendruck in der Düsenkammer (10,11) in dem ersten Druckbereich von 10-12 bar erzeugt, und dass die Rückholfeder (12) so bemessen ist, dass bei Zurückbewegung der Düse (8) ein Innendruck in der Düsenkammer (10,11) von 5-6 bar entsteht, wobei der zweite Druckbereich zwischen 5-6 bar als oberer Grenze und Atmosphärendruck als unterer Grenze liegt.

3. Einspritzdampferzeuger nach Anspruch 1 oder 2,
**dadurch gekennzeichnet,**
**dass** die Ventilanordnung als Membranventil (19) ausgebildet ist, bei dem eine Membran eine Ventilklappe bildet, die in dem ersten Druckbereich geschlossen ist und in dem zweiten Druckbereich geöffnet ist.

4. Einspruchsdampferzeuger nach Anspruch 1 oder 2,
**gekennzeichnet durch**
ein federbelastetes Kugelventil (21) als Ventilanordnung, das in dem ersten Druckbereich entgegen der Belastung **durch** eine Feder (22) geschlossen ist und in dem zweiten Druckbereich **durch** die Federbelastung geöffnet ist.

5. Einspritzventil nach einem der vorangehenden Ansprüche,
**dadurch gekennzeichnet,**
**dass** der Ablaufkanal (18) zu einen Vorratswasserbehälter (15) führt, der höher als die Düsenkammer (10,11) angeordnet ist.

## Claims

1. Steam injector for small appliances, in particular steam irons or ironing stations, having a steam chamber (3) in a steam generator housing (1), which has an injection hole (5) with a displaceable nozzle (8) mounted telescopically on a fixed part (11) of a nozzle chamber (10, 11) and which can be displaced by the internal pressure in the nozzle chamber in a first pressure range in the direction towards the injection hole (5) and can be moved back away from the injection hole (5) by a restoring force, in particular a restoring spring (12), such that the internal pressure in the nozzle chamber (10, 11) in a second pressure range is lower than in the first pressure range, and also having means for draining residual water away from the steam injector when the nozzle (8) is moved back,
**characterised in that**
to drain off excess water from the nozzle chamber (10, 11) when the nozzle moves back, a drain channel (18) is connected via a valve arrangement (19, 21) to the fixed part (11) of the nozzle chamber and the valve arrangement (19, 21) is formed such that in the first pressure range of the internal pressure in the nozzle chamber (10, 11) the valve closes the drain channel (18) and in the second pressure range of the internal pressure in the nozzle chamber the valve opens the said channel.

2. Steam injector according to Claim 1,
**characterised in that**
on the fixed part (11) of the nozzle chamber a pump (13) with a pump outlet valve is arranged, which when the pump is operating produces an internal pressure in the nozzle chamber (10, 11) in the first pressure range of 10 to 12 bars, and the restoring spring (12) is designed such that when the nozzle (8) moves back an internal pressure in the nozzle chamber (10, 11) of 5 to 6 bars is produced, such that the second pressure range extends between 5 to 6 bars as its upper limit and atmospheric pressure as its lower limit.

3. Steam injector according to Claims 1 or 2,
**characterised in that**
the valve arrangement is in the form of a membrane valve (19) in which a membrane forms the valve closing element, which is closed in the first pressure range and open in the second pressure range.

4. Steam injector according to Claims 1 or 2,
**characterised in that**
it comprises a spring-loaded ball valve (21) as the valve arrangement, which in the first pressure range is closed against the load of a spring (22) and in the second pressure range is opened by the force of the said spring.

5. Injection valve according to any of the preceding claims,
**characterised in that**
the drain channel (18) leads to a water reservoir (15) which is positioned higher than the nozzle chamber (10, 11).

## Revendications

1. Générateur de vapeur à injection pour des petits appareils, en particulier des fers à repasser ou des stations de repassage, avec une chambre à vapeur (3) dans un boîtier de production de vapeur (1), qui présente un trou d'injection (5), avec une buse (8) coulissante, qui est montée de façon télescopique sur une partie fixe (11) d'une chambre de buse (10, 11), qui peut coulisser sous l'effet d'une pression interne dans la chambre de buse dans une première zone de pression en direction du trou d'injection (5) et qui peut reculer sous l'effet d'une force de rappel, en particulier d'un ressort de rappel (12), à partir du trou d'injection (5), la pression interne dans la chambre de buse (10, 11) dans une seconde zone de pression étant inférieure à celle régnant dans la première zone de pression, et avec des moyens pour l'évacuation d'eau résiduelle du générateur de vapeur à injecteur lors du recul de la buse (8),
**caractérisé en ce que**
pour l'évacuation d'eau résiduelle excédentaire de la chambre de buse (10, 11) lors du recul de la buse (8), un canal d'évacuation (18) est relié, par un dispositif de soupape (19, 21), à la partie fixe (11) de la chambre de buse et **en ce que** le dispositif de soupape (19, 21) est conçu de façon qu'il ferme le canal d'évacuation (18) dans la première zone de pression de la pression interne dans la chambre de buse (10, 11) et l'ouvre dans la seconde zone de pression de la pression interne dans la chambre de buse (10, 11).

2. Générateur de vapeur à injection selon la revendication 1,
**caractérisé en ce que**
sur la partie fixe (11) de la chambre de buse est disposée une pompe (13) avec une soupape de sortie de pompe, qui génère, lorsque la pompe fonctionne, une pression interne dans la chambre de buse (10, 11) dans la première zone de pression de 10-12 bars, et **en ce que** le ressort de rappel (12) est dimensionné de telle sorte que, lors du recul de la buse (8), il se forme une pression interne dans la chambre de buse (10, 11) de 5-6 bars, la seconde zone de pression étant située entre 5 et 6 bars comme limite supérieure et la pression atmosphérique comme limite inférieure.

3. Générateur de vapeur à injection selon la revendication 1 ou 2,
**caractérisé en ce que**
le dispositif de soupape est conçu comme une soupape à diaphragme (19), sur laquelle un diaphragme forme un clapet de soupape qui est fermé dans la première zone de pression et est ouvert dans la seconde zone de pression.

4. Générateur de vapeur à injection selon la revendication 1 ou 2,
**caractérisé par** une soupape à bille (21) sollicitée par ressort comme dispositif de soupape qui est fermée dans la première zone de pression à l'encontre de la sollicitation par un ressort (22) et est ouverte dans la seconde zone de pression par la sollicitation du ressort.

5. Soupape d'injection selon l'une quelconque des revendications précédentes,
**caractérisée en ce que**
le canal d'évacuation (18) aboutit à un récipient d'eau de réserve (15) qui est disposé plus haut que la chambre de buse (10, 11).
